# FASCICULE DE BREVET EUROPEEN

(11) **EP 1 207 079 B1**
(45) Date de publication et mention de la délivrance du brevet: **05.10.2005**
(21) Numéro de dépôt: 01402948.2
(22) Date de dépôt: 16.11.2001
(51) Int. Cl.: B60R 7/04

(54) **Siège de véhicule délimitant un espace de chargement**
Laderaumbegrenzender Fahrzeugsitz
Vehicle seat delimiting a loading space

(30) Priorité: 17.11.2000 FR 0014830
(43) Date de publication de la demande: 22.05.2002
(73) Titulaire: Renault s.a.s., 92100 Boulogne Billancourt (FR)
(72) Inventeur: Legrand, Jean-Pierre, 28300 Bercheres Saint Germain (FR)

(56) Documents cités:
- WO-A-00/13931
- DE-A- 19 735 098
- DE-U- 9 412 066
- FR-A- 2 377 901
- GB-A- 2 316 608
- US-A- 5 816 650
- US-A- 6 135 332

## Description

L'invention concerne un siège individuel de véhicule comportant les caractéristiques du préambule de la revendication 1, tel que connu de GB-A-2316608.

L'invention concerne plus particulièrement un siège individuel de véhicule, orienté d'avant en arrière selon un axe longitudinal, comportant un élément d'assise et un élément de dossier, du type dans lequel l'élément d'assise est monté pivotant sur un socle, vers le haut, autour d'un axe avant transversal et horizontal, depuis une position d'assise, dans laquelle il délimite un plan globalement horizontal, vers une position relevée, dans laquelle il s'étend globalement verticalement vers le haut.

Lorsque le conducteur d'un véhicule est seul à l'avant du véhicule et qu'il désire emporter quelques objets, il les place généralement à côté de lui, sur le siège du passager avant, ce qui lui évite d'ouvrir le coffre pour les y placer. De plus, les objets sont facilement à sa portée.

On constate cependant que le siège du passager avant n'est pas prévu pour recevoir des objets. En particulier, ce siège ne comporte pas de moyens de retenue des objets.

Ainsi, les objets posés sur le siège du passager avant ont souvent tendance à en tomber, en particulier lorsque la voiture est dans un virage ou bien lors d'un freinage appuyé.

Les publications GB-A-2316608 et FR-A-2377901 décrivent des si transformables afin de recevoir des objets au niveau du passager avant.

L'invention vise donc à proposer un siège qui permette de charger des objets et qui les retienne dans leur emplacement de chargement.

Dans ce but, l'invention propose un siège du type décrit précédemment et ayant les caractéristiques de la revendication 1.

Selon d'autres caractéristiques de l'invention :
- le siège comporte deux panneaux latéraux escamotables, en vue de délimiter un espace de chargement au-dessus du socle du siège ;
- dans la position d'assise de l'élément d'assise, chaque panneau latéral s'escamote sous l'élément d'assise ;
- chaque panneau latéral est monté articulé sur le socle, autour d'un axe sensiblement longitudinal, entre la position dans laquelle il délimite un côté de l'espace de chargement, ou position déployée, et sa position escamotée ;
- chaque panneau latéral comporte un dispositif de rappel élastique qui sollicite le panneau vers sa position escamotée ;
- chaque panneau latéral comporte au moins un dispositif de blocage qui retient le panneau dans sa position déployée ;
- chaque panneau latéral comporte un filet de retenue qui est tendu à l'intérieur d'un cadre rigide ;
- chaque panneau latéral est formé d'un tissu, ou filet, qui, dans la position relevée de l'élément d'assise, est tendu élastiquement entre la face arrière de l'élément d'assise et la base de la face avant de l'élément de dossier ;
- une portion supérieure de l'élément de dossier est articulée par rapport à une portion inférieure de l'élément de dossier, autour d'un axe arrière transversal et horizontal, de manière à pivoter vers l'avant jusqu'à une position sensiblement horizontale dans laquelle la portion supérieure vient fermer la face supérieure ouverte de l'espace de chargement, lorsque l'élément d'assise est en position relevée.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de trois-quarts arrière qui représente un siège de véhicule réalisé conformément aux enseignements de l'invention et dont l'élément d'assise occupe sa position relevée ;
- la figure 2 est une vue en perspective de trois-quarts avant qui représente une partie du siège de la figure 1, le panneau droit occupant sa position déployée et le panneau gauche occupant sa position escamotée ;
- la figure 3 est une vue de détail qui représente le dispositif de blocage du panneau gauche du siège ;
- la figure 4 est une vue en coupe transversale du siège, l'élément d'assise occupant sa position d'assise ;
- la figue 5 est une vue similaire à celle de la figure 1 qui représente une variante du siège selon l'invention dans laquelle l'élément de dossier comporte une portion supérieure articulée, la portion supérieure occupant sa position sensiblement horizontale.

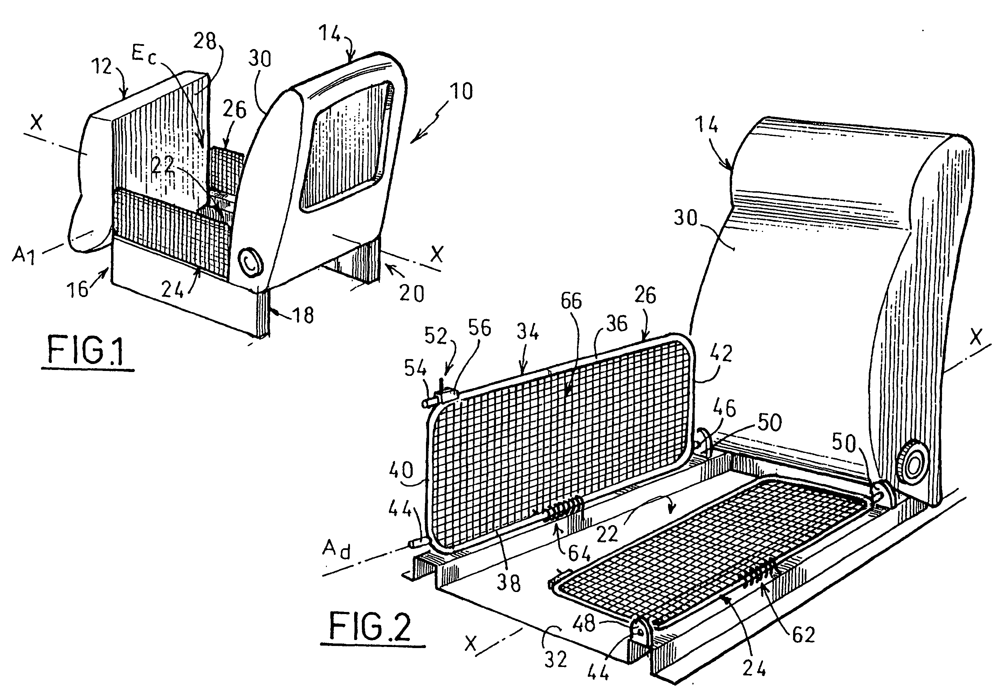

On a représenté sur la figure 1 un siège individuel 10 de véhicule qui est réalisé conformément aux enseignements de l'invention.

Dans la suite de la description on utilisera une orientation d'avant en arrière suivant un axe longitudinal X-X qui correspond globalement à une orientation de la gauche vers la droite sur la figure 1.

On définira aussi une orientation transversale par rapport à l'axe longitudinal X-X, et une orientation verticale conforme à l'orientation de la figure 1.

Le côté gauche et le côté droit du siège 10 sont définis par rapport à l'axe longitudinal X-X, lorsque l'on regarde vers l'avant.

Le siège 10 comporte un élément d'assise 12 et un élément de dossier 14 qui sont montés sur un socle 16.

Le socle 16 comporte ici deux longerons longitudinaux 18, 20 et une plaque transversale 22 sensiblement horizontale fixée sur les deux longerons 18, 20.

L'élément d'assise 12 est monté pivotant, vers le haut, autour d'un axe avant A1 transversal et horizontal, depuis une position d'assise Pa, dans laquelle l'élément d'assise 12 délimite un plan globalement horizontal, vers une position relevée Pr, dans laquelle l'élément d'assise 12 s'étend globalement verticalement vers le haut.

Sur la figure 1, l'élément d'assise 12 est représenté en position relevée Pr.

Conformément aux enseignements de l'invention, le siège 10 comporte un panneau latéral gauche 24 et un panneau latéral droit 26 escamotables.

Les panneaux latéraux 24, 26 sont susceptibles d'occuper une position déployée Pd et une position escamotée Pe.

Dans la position relevée Pr de l'élément d'assise 12, chaque panneau 24, 26 occupe sa position déployée Pd, c'est à dire qu'il s'étend sensiblement longitudinalement et verticalement entre la face arrière 28 de l'élément d'assise 12 et la face avant 30 de l'élément de dossier 14, de manière que les deux panneaux latéraux 24, 26 délimitent un espace de chargement Ec au-dessus de la plaque 22 du socle 16.

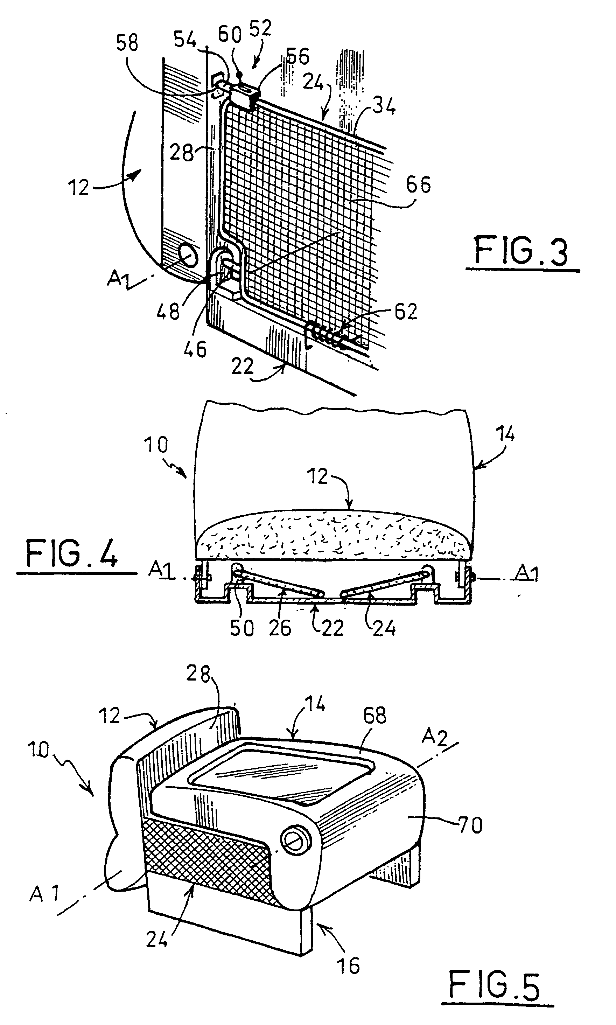

La figure 4 représente l'élément d'assise 12 dans sa position d'assise Pa, les panneaux latéraux 24, 26 occupant alors leur position escamotée Pe.

Dans sa position escamotée Pe, chaque panneau latéral 24, 26 s'étend sensiblement horizontalement et transversalement, entre la face 28 de l'élément d'assise 12 en position d'assise Pa et la face supérieure 32 de la plaque 22 du socle 16.

On décrira maintenant le panneau droit 26, en référence à la figure 2 dans laquelle il est représenté dans sa position déployée Pd, le panneau gauche 24 étant représenté dans sa position escamotée Pe.

On note que la représentation de la figure 2 est fictive car les deux panneaux latéraux 24, 26 sont prévus pour occuper simultanément soit la position déployée Pd, soit la position escamotée Pe.

Le panneau gauche 24 est symétrique au panneau droit 26 par rapport à un plan longitudinal et vertical.

Le panneau droit 26 est ici constitué d'un cadre 34 sensiblement rectangulaire dont les grands montants 36, 38 sont orientés longitudinalement et dont les petits montants 40, 42 sont orientés verticalement.

Le cadre 34 comporte, au voisinage de l'extrémité inférieure de chaque petit montant 40, 42, globalement dans le prolongement de son grand montant inférieur 38, un goujon 44, 46 qui est monté à rotation dans une patte de support 48, 50 fixée sur la face supérieure 32 de la plaque 22.

Le cadre 34 est donc monté pivotant autour d'un axe géométrique longitudinal droit Ad.

Pour passer de sa position escamotée Pe à sa position déployée Pd, le cadre 34 du panneau droit 26 pivote d'environ un quart de tour, dans le sens horaire lorsque l'on regarde vers l'avant.

Avantageusement, comme on peut le voir en détail sur la figure 3, le cadre 34 comporte, à l'extrémité supérieure de son petit montant avant 40, un dispositif de blocage 52 du panneau 26 dans sa position déployée Pd.

Ce dispositif de blocage 52 comporte par exemple un doigt de blocage 54 d'orientation longitudinale qui est monté coulissant longitudinalement dans un boîtier 56 et qui est sollicité, vers l'avant, par un ressort (non représenté) dans un trou 58 associé de la face arrière 28 de l'élément d'assise 12.

Le doigt de blocage 54 comporte ici une branche de préhension 60 qui permet à l'utilisateur de repousser le doigt 54 vers l'arrière, à l'encontre du ressort, en vue de désactiver le dispositif de blocage 52 et permettre au panneau latéral 26 de reprendre sa position escamotée Pe.

Avantageusement, chaque panneau latéral 24, 26 comporte un dispositif de rappel élastique 62, 64 vers la position escamotée Pe.

Ce dispositif de rappel élastique 62, 64 est ici un ressort du type strapontin qui est monté sur le grand montant inférieur 38 du cadre 34.

On note que, selon une variante de réalisation (non représentée) du dispositif de rappel élastique 62, 64, celui-ci peut être agencé de manière qu'il fonctionne en sens inverse, c'est à dire qu'il rappelle le panneau latéral associé 24, 26 depuis sa position escamotée Pe vers sa position déployée Pd.

Le cadre 34 est réalisé par exemple en métal ou en matière plastique.

Un filet de retenue 66 est tendu à l'intérieur du cadre 34.

Le filet de retenue 66 est réalisé par exemple au moyen de fils tressés en matière naturelle ou synthétique.

Selon une variante de réalisation (non représentée) de l'invention, le filet de retenue 66 peut être remplacé par une toile tendue à l'intérieur du cadre, par un panneau rigide, par exemple en matière plastique, ou encore par un grillage.

Le fonctionnement du siège 10 selon l'invention est le suivant.

L'élément d'assise 12 du siège 10 étant en position d'assise Pa, si l'on désire charger des objets, on bascule l'élément d'assise 12, vers le haut, autour de son axe A1, jusqu'à ce qu'il occupe sa position relevée Pr.

On fait alors pivoter chaque panneau latéral 24, 26 autour de son axe d'articulation Ad, depuis sa position escamotée Pe jusqu'à sa position déployée Pd.

Dès qu'un panneau latéral 24, 26 occupe sa position déployée Pd, son doigt de blocage 54 pénètre dans le trou associé 58 de la face arrière 28 de l'élément d'assise 12, ce qui retient le panneau 24, 26 dans sa position déployée Pd.

Les deux panneaux latéraux 24, 26, la face arrière 28 de l'élément d'assise 12 et la face avant 30 de l'élément de dossier 14 délimitent alors entre eux un espace de chargement Ec dans lequel on peut placer des objets (non représentés).

Lorsque l'on veut à nouveau utiliser le siège 10 pour recevoir un passager en position assise, alors on désactive le dispositif de blocage 52 de chaque panneau latéral 24, 26 qui reprend sa position escamotée sous l'action de son ressort de rappel 62, 64.

On bascule ensuite l'élément d'assise 12, vers le bas et vers l'arrière, autour de son axe A1, de manière qu'il occupe à nouveau sa position d'assise Pa.

A la figure 5 on a représenté une variante de réalisation du siège 10 selon l'invention dans laquelle l'élément de dossier 14 comporte une portion supérieure 68 qui est articulée par rapport à une portion inférieure 70 de l'élément de dossier 14, autour d'un axe arrière A2 transversal et horizontal.

Lorsque l'élément d'assise 12 occupe sa position relevée Pr et lorsque les panneaux latéraux 24, 26 occupent leur position déployée Pd, on peut alors basculer, vers l'avant, la portion supérieure 68 de l'élément de dossier 14 jusqu'à ce qu'elle occupe une position sensiblement horizontale, qui est représentée sur la figure 5, dans laquelle elle ferme la face supérieure ouverte de l'espace de chargement Ec.

La portion supérieure 68 de l'élément de dossier 14 permet ainsi de dissimuler les objets contenus dans l'espace de chargement Ec.

Selon une variante de réalisation (non représentée) de l'invention, chacun des panneaux latéraux 24, 26 est formé uniquement d'une pièce de tissu ou d'un filet qui est tendu élastiquement entre la face arrière 28 de l'élément d'assise 12 et la base de la face avant 30 de l'élément de dossier 14, lorsque l'élément d'assise occupe sa position relevée Pr.

Chaque panneau latéral 24, 26 se replie alors sous l'élément d'assise 12 lorsque celui-ci bascule de sa position relevée Pr à sa position d'assise Pa.

On note que l'invention ne se limite pas à un siège avant de véhicule.

De plus, l'orientation du siège et de l'assise décrits précédemment n'est pas limitative de l'invention.

## Revendications

1. Siège individuel (10) de véhicule, orienté d'avant en arrière selon un axe longitudinal (X-X), comportant un élément d'assise (12) et un élément de dossier (14), du type dans lequel l'élément d'assise (12) est monté pivotant sur un socle (16), vers le haut, autour d'un axe avant (A1) transversal et horizontal, depuis une position d'assise (Pa), dans laquelle il délimite un plan globalement horizontal, vers une position relevée (Pr), dans laquelle il s'étend globalement verticalement vers le haut,
**caractérisé en ce qu'**il comporte au moins un panneau latéral (24, 26) escamotable, qui comporte un filet ou un tissu de retenue (66) tendu, et qui, dans la position relevée (Pr) de l'élément d'assise (12), s'étend longitudinalement et verticalement, entre la face arrière (28) de l'élément d'assise (12) et la face avant (30) de l'élément de dossier (14), sur un côté du socle (16) du siège (10).

2. Siège (10) selon la revendication précédente, **caractérisé en ce qu'**il comporte deux panneaux latéraux (24, 26) escamotables, en vue de délimiter un espace de chargement (Ec) au-dessus du socle (16) du siège (10).

3. Siège (10) selon l'une quelconque des revendications précédentes, **caractérisé en ce que**, dans la position d'assise (Pa) de l'élément d'assise (12), chaque panneau latéral (24, 26) s'escamote sous l'élément d'assise (12).

4. Siège (10) selon l'une quelconque des revendications précédentes, **caractérisé en ce que** chaque panneau latéral (24, 26) est monté articulé sur le socle (16), autour d'un axe sensiblement longitudinal (Ad), entre la position dans laquelle il délimite un côté de l'espace de chargement, ou position déployée (Pd), et sa position escamotée (Pe).

5. Siège (10) selon la revendication précédente, **caractérisé en ce que** chaque panneau latéral (24, 26) comporte un dispositif de rappel élastique (62, 64) qui sollicite le panneau (24, 26) vers sa position escamotée (Pe).

6. Siège (10) selon la revendication 4 ou 5, **caractérisé en ce que** chaque panneau latéral (24, 26) comporte au moins un dispositif de blocage (52) qui retient le panneau (24, 26) dans sa position déployée (Pd).

7. Siège (10) selon l'une quelconque des revendications précédentes, **caractérisé en ce que** le filet de retenue ou tissu (66) est tendu à l'intérieur d'un cadre rigide (34).

8. Siège (10) selon l'une quelconque des revendications 1 à 3, **caractérisé en ce que** chaque panneau latéral (24, 26) est formé d'un tissu, ou filet, qui, dans la position relevée (Pr) de l'élément d'assise (12), est tendu élastiquement entre la face arrière (28) de l'élément d'assise (12) et la base de la face avant (30) de l'élément de dossier (14).

9. Siège (10) selon l'une quelconque des revendications 2 à 8, **caractérisé en ce qu'**une portion supérieure (68) de l'élément de dossier (14) est articulée par rapport à une portion inférieure (70) de l'élément de dossier (14), autour d'un axe arrière (A2) transversal et horizontal, de manière à pivoter vers l'avant jusqu'à une position sensiblement horizontale dans laquelle la portion supérieure (68) vient fermer la face supérieure ouverte de l'espace de chargement (Ec), lorsque l'élément d'assise (12) est en position relevée (Pr).

## Patentansprüche

1. Einzelsitz (10) eines Fahrzeuges, mit Front-Rück-Ausrichtung entlang einer Längsachse (X-X), mit einem Sitzelement (12) und einem Rückenlehnenelement (14), von einem solchen Typ, bei welchem das Sitzelement (12) um eine vordere und waagrechte Querachse (A1) nach oben schwenkbar auf einem Sockel (16) montiert ist, von einer Sitzposition (Pa), in welchem es eine im Wesentlichen waagrechte Ebene begrenzt, zu einer hochgeklappten Position (Pr), in welchem es sich im Wesentlichen senkrecht nach oben erstreckt, **dadurch gekennzeichnet, dass** er wenigstens eine einklappbare Seitenplatte (24, 26) aufweist, die ein gespanntes Rückhaltenetz oder einen gespannten Rückhaltestoff (66) umfasst, und die sich in der hochgeklappten Position (Pr) des Sitzelementes (12) längs und senkrecht zwischen der Rückfläche (28) des Sitzelementes (12) und der Vorderfläche (30) des Rückenlehnenelementes (14) auf einer Seite des Sockels (16) des Sitzes (10) erstreckt.

2. Sitz (10) gemäß dem vorhergehenden Anspruch, **dadurch gekennzeichnet, dass** er zwei einklappbare Seitenplatten (24, 26) umfasst, um über dem Sockel (16) des Sitzes (10) einen Laderaum (Ec) abzugrenzen.

3. Sitz (10) gemäß einem der vorhergehenden Ansprüche, **dadurch gekennzeichnet, dass** sich jede Seitenplatte (24, 26) in der Sitzposition (Pa) des Sitzelementes (12) unter dem Sitzelement (12) zusammenklappt.

4. Sitz (10) gemäß einem der vorhergehenden Ansprüche, **dadurch gekennzeichnet, dass** jede Seitenplatte (24, 26) um eine im Wesentlichen Längsachse (Ad) angelenkt auf dem Sockel (16) montiert ist, zwischen der Position, in welcher sie eine Seite des Laderaumes begrenzt, oder auch ausgeklappten Position (Pd), und ihrer eingeklappten Position (Pc).

5. Sitz (10) gemäß dem vorhergehenden Anspruch, **dadurch gekennzeichnet, dass** jede Seitenplatte (24, 26) eine elastische Rückstelleinrichtung (62, 64) umfasst, welche die Platte (24, 26) zu ihrer eingeklappten Position (Pc) hin vorspannt.

6. Sitz (10) gemäß Anspruch 4 oder 5, **dadurch gekennzeichnet, dass** jede Seitenplatte (24, 26) mindestens eine Blockiereinrichtung (52) umfasst, welche die Platte (24, 26) in ihrer ausgeklappten Position (Pd) hält.

7. Sitz (10) gemäß einem der vorhergehenden Ansprüche, **dadurch gekennzeichnet, dass** das Rückhaltenetz oder der Stoff (66) im Inneren eines steifen Rahmens (34) gespannt ist.

8. Sitz (10) gemäß einem der Ansprüche 1 bis 3, **dadurch gekennzeichnet, dass** jede Seitenplatte (24, 26) aus einem Stoff oder einem Netz besteht, welches in der hochgeklappten Position (Pr) des Sitzelementes (12) elastisch zwischen der Rückfläche (28) des Sitzelementes (12) und der Basis der Vorderfläche (30) des Rückenlehnenelementes (14) gespannt ist.

9. Sitz (10) gemäß einem der Ansprüche 2 bis 8, **dadurch gekennzeichnet, dass** ein oberer Abschnitt (68) des Rückenlehnenelementes (14) um eine rückwärtige und waagrechte Querachse (A2) im Verhältnis zu einem unteren Abschnitt (70) des Rückenlehnenelementes (14) angelenkt ist, um bis zu einer im Wesentlichen waagrechten Position nach vorne zu schwenken, in welcher der obere Abschnitt (68) die obere offene Fläche des Laderaumes (Ec) abschließt, wenn das Sitzelement (12) sich in seiner hochgeklappten Position (Pr) befindet.

## Claims

1. An individual vehicle seat (10), oriented from front to rear along a longitudinal axis (X-X), comprising a seat member (12) and a back member (14), of the type in which the seat member (12) is mounted to pivot upwards on a base (16) about a front transverse and horizontal axis (A1), from a seating position (Pa) in which it is in a globally horizontal plane, to a raised position (Pr) in which it extends globally vertically upwards, **characterised in that** it comprises at least one retractable lateral panel (24, 26) which comprises a stretched retaining net or fabric (66) and which, in the raised position (Pr) of the seat member (12), extends longitudinally and vertically between the rear surface (28) of the seat member (12) and the front surface (30) of the back member (14) on one side of the base (16) of the seat (10).

2. A seat (10) as claimed in the preceding claim, **characterised in that** it comprises two retractable lateral panels (24, 26) in order to bound a loading space (Ec) above the base (16) of the seat (10).

3. A seat (10) as claimed in any one of the preceding claims, **characterised in that** in the seating position (Pa) of the seat member (12), each lateral panel (24, 26) is retracted below the seat member (12).

4. A seat (10) as claimed in any one of the preceding claims, **characterised in that** each lateral panel (24, 26) is mounted in an articulated manner on the base (16), about a substantially longitudinal axis (Ad), between the position in which it bounds a side of the loading space, or deployed position (Pd), and its retracted position (Pe).

5. A seat (10) as claimed in the preceding claim, **characterised in that** each lateral panel (24, 26) comprises an elastic recall device (62, 64) which urges the panel (24, 26) into its retracted position (Pe).

6. A seat (10) as claimed in claim 4 or 5, **characterised in that** each lateral panel (24, 26) comprises at least one locking device (52) which holds the panel (24, 26) in its deployed position (Pd).

7. A seat (10) as claimed in any one of the preceding claims, **characterised in that** the retaining net or fabric (66) is stretched within a rigid frame (34).

8. A seat (10) as claimed in any one of claims 1 to 3, **characterised in that** each lateral panel (24, 26) is formed by a fabric, or net, which, in the raised position (Pr) of the seat member (12), is stretched elastically between the rear surface (28) of the seat member (12) and the base of the front surface (30) of the back member (14).

9. A seat (10) as claimed in any one of claims 2 to 8, **characterised in that** an upper portion (68) of the back member (14) is articulated with respect to a lower portion (70) of the back member (14), about a rear transverse and horizontal axis (A2), so as to pivot forward into a substantially horizontal position in which the upper portion (68) closes the open upper surface of the loading space (Ec) when the seat member (12) is in the raised position (Pr).
